# EUROPEAN PATENT APPLICATION

(11) **EP 4 783 305 A1**
(43) Date of publication of application: **29.07.2026**
(21) Application number: 25212991.1
(22) Date of filing: 03.11.2025
(51) Int. Cl.: H01M 50/103, H01M 50/147, H01M 50/15, H01M 50/176, H01M 50/528, H01M 50/529, H01M 50/533, H01M 50/534, H01M 50/536, H01M 50/54, H01M 50/553

(54) **SECONDARY BATTERY**

(30) Priority: 24.01.2025 KR 20250011236
(71) Applicant: SAMSUNG SDI CO., LTD., Yongin-si, Gyeonggi-do 17084 (KR)
(72) Inventor: HWANG, Yusik, Yongin-si, Gyeonggi-do 17084 (KR)
(74) Representative: Gulde & Partner

(57) **Abstract**

A secondary battery, including an electrode assembly including a first electrode tab on one side and a second electrode tab on another side, a case having open side(s) and accommodating the electrode assembly, a first cap plate coupled to the at least one open side of the case, a first electrode terminal electrically connected to the first electrode tab and being exposed outside the first cap plate, a first sub-plate electrically connecting the first electrode tab and the first electrode terminal, and a first insulator between the first cap plate and the electrode assembly, wherein the first sub-plate includes a first plate portion coupled to the first electrode tab, a first tab portion having one end coupled to the first plate portion and another end coupled to the first electrode terminal, and a first coating layer on at least a part of a surface of the first tab portion.

## Description

### BACKGROUND

### 1. Field

The present disclosure relates to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The present invention relates to a secondary battery, the secondary battery including: an electrode assembly including a first electrode tab on one side thereof and a second electrode tab on another side thereof, a case having at least one open side, the case accommodating the electrode assembly, a first cap plate coupled to one open side of the case, a first electrode terminal electrically connected to the first electrode tab, the first electrode terminal being exposed outside the first cap plate, a first sub-plate electrically connecting the first electrode tab and the first electrode terminal, and a first insulator between the first cap plate and the electrode assembly, wherein the first sub-plate includes a first plate portion coupled to the first electrode tab, a first tab portion having one end coupled to the first plate portion and another end coupled to the first electrode terminal, and a first coating layer on at least a part of a surface of the first tab portion.

The first plate portion may include a first welded portion welded to the first electrode tab, and a first protruding portion connected to the first welded portion, the first protruding portion protruding in a direction from the welded portion toward the first cap plate.

The first welded portion may include first welded portions, the first welded portions being spaced apart from each other with the first protruding portion therebetween.

The first tab portion may be welded to the first protruding portion at one end and the first tab portion may be welded to the first electrode terminal at another end.

The first tab portion may include a first connecting portion between the one end of the first tab portion welded to the first protruding portion and the another end of the first tab portion welded to the first electrode terminal.

When the first tab portion is in an unfolded state, a length of the one end of the first tab portion welded to the first protruding portion may be 10% to 30% of an entire length of the first tab portion.

When the first tab portion is in an unfolded state, a length of the another end of the first tab portion welded to the first electrode terminal may be 10% to 30% of an entire length of the first tab portion.

When the first tab portion is in an unfolded state, a length of the first connecting portion may be 40% to 80% of an entire length of the first tab portion.

The first coating layer may surround at least part of the first connecting portion of the first tab portion.

The first tab portion may be bent at least once at the first connecting portion on which is the first coating layer.

The first coating layer may be an adhered film.

A width of the adhered film may correspond to a perimeter of the first connecting portion, the perimeter being twice a sum of a width of the first connecting portion and a thickness of the first connecting portion.

The adhered film may further include a first adhesive layer on a surface of the adhered film facing the first tab portion. Preferably, the adhered film may comprise at least one of a heat-resistant material and a chemical-resistant material and may further include a first adhesive layer on a surface of the adhered film facing the first tab portion. More preferably, the adhered film may comprise at least one of material selected from the group consisting of: a liquid crystal polymer, polyvinylidene fluoride, polyether ether ketone, and polyphenylene sulfide, and may further include a first adhesive layer on a surface of the adhered film facing the first tab portion.

The first coating layer may include at least one of a heat-resistant material and a chemical-resistant material.

The first coating layer may include at least one of a liquid crystal polymer, polyvinylidene fluoride, polyether ether ketone, and polyphenylene sulfide.

The first insulator may include a first opening hole through which the first tab portion of the first sub-plate penetrates, and a first body portion and a second body portion being spaced apart from each other with the first opening hole therebetween.

The first electrode terminal may include a first collector on a surface of the first cap plate facing the electrode assembly, the first collector having a through-hole, a first terminal plate on an opposite surface of the first cap plate from the surface facing the electrode assembly, the first terminal plate having a through-hole, and a first rivet engaging the through-hole of the first collector and the through-hole of the first terminal plate, the first rivet penetrating through the first cap plate.

The secondary battery may further include a second cap plate coupled to another open side of the case, a second electrode terminal electrically connected to the second electrode tab, the second electrode terminal being exposed outside the second cap plate, a second sub-plate electrically connecting the second electrode tab and the second electrode terminal, and a second insulator between the second cap plate and the electrode assembly.

The second sub-plate may include a second plate portion coupled to the second electrode tab, a second tab portion having one end coupled to the second plate portion and another end coupled to the second electrode terminal, and a second coating layer on at least part of a surface of the second tab portion.

The second tab portion may include a second connecting portion between the one end of the second tab portion welded to the second plate portion and the another end of the second tab portion welded to the second electrode terminal, and the second coating layer surrounds at least part of the second connecting portion.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail exemplary embodiments with reference to the attached drawings, in which:
FIG. 1 illustrates a perspective view showing an example of a secondary battery according to an embodiment of the present disclosure;
FIG. 2 illustrates an exploded perspective view showing an example of a secondary battery according to an embodiment of the present disclosure;
FIG. 3 is a cross-sectional view illustrating a section taken along line A-A' in FIG. 1;
FIG. 4 is an enlarged view illustrating part B of FIG. 3;
FIG. 5 is a side cross-sectional view illustrating an example of a secondary battery according to an embodiment of the present disclosure;
FIG. 6 illustrates a perspective view showing an example of an electrode assembly according to an embodiment of the present disclosure;
FIG. 7 illustrates a perspective view showing a state in which a first electrode tab and a first sub-plate are coupled according to an embodiment of the present disclosure;
FIG. 8 illustrates an exploded perspective view of a first sub-plate according to an embodiment of the present disclosure;
FIG. 9 illustrates a perspective view showing a coupled example of a first electrode tab and a first sub-plate according to an embodiment of the present disclosure;
FIG. 10 illustrates a perspective view showing a state in which a first insulator is coupled according to an embodiment of the present disclosure;
FIG. 11 illustrates a perspective view showing an example of coupling of the first insulator according to an embodiment of the present disclosure;
FIG. 12 illustrates a perspective view showing an example of coupling of a first cap plate and a first electrode terminal according to an embodiment of the present disclosure; and
FIG. 13 illustrates a perspective view of an example of a first tab portion in an unfolded state according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) 1.0 and 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with an upper (or lower) surface of that element, or another element may also be interposed between the element and the arbitrary element disposed on (or under) the element.

In addition, it will be understood that when a component is referred to as being "linked," "coupled," or "connected" to another component, the elements may be directly coupled, linked, or connected to each other, or another component may be interposed between the components.

Throughout the specification, when "A and/or B" is stated, it means A, B, orA and B, unless otherwise stated. That is, "and/or" includes any or all combinations of a plurality of items enumerated. When "C to D" is stated, it means greater than or equal to C and less than or equal to D, unless otherwise specified.

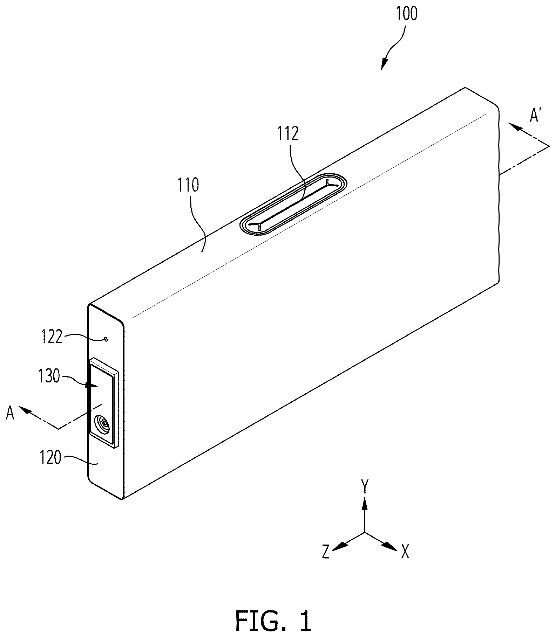

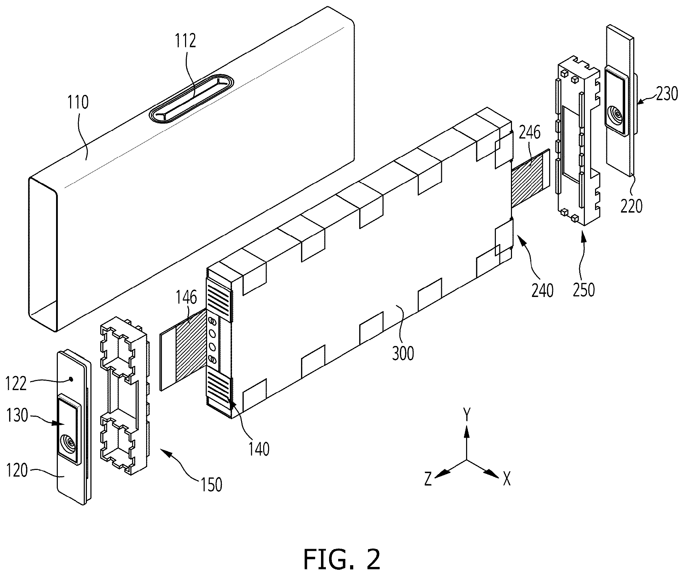

FIG. 1 is a perspective view illustrating an example of a secondary battery according to an embodiment of the present disclosure, and FIG. 2 is an exploded perspective view illustrating an example of a secondary battery according to an embodiment of the present disclosure.

Referring to FIGS. 1 and 2, a secondary battery 100 may include an electrode assembly 300, a case 110, a first cap plate 120, a first electrode terminal 130, a first sub-plate 140, and a first insulator 150. The secondary battery 100 may further include a second cap plate 220, a second electrode terminal 230, a second sub-plate 240, and a second insulator 250. The first cap plate 120, the first electrode terminal 130, the first sub-plate 140, and the first insulator 150 may be disposed symmetrically with respect to the electrode assembly 300, relative to the second cap plate 220, the second electrode terminal 230, the second sub-plate 240, and the second insulator 250. Hereinafter, for convenience of description, the explanation will focus on the first cap plate 120, the first electrode terminal 130, the first sub-plate 140, and the first insulator 150.

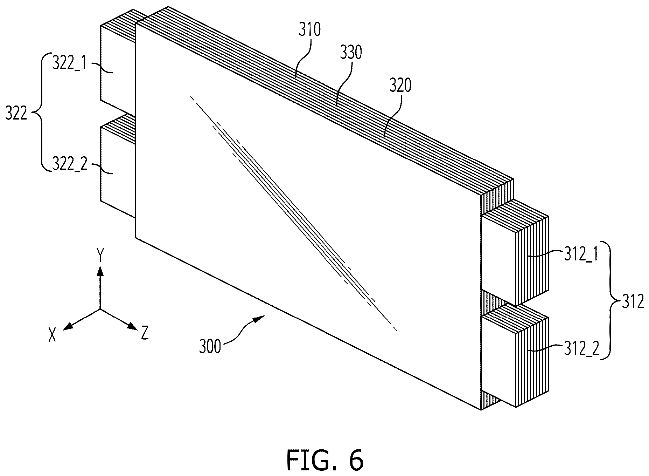

The electrode assembly 300 may include a first electrode tab formed on one side thereof (e.g., a first electrode tab formed on one side of the electrode assembly) and a second electrode tab formed on the other side thereof (e.g., another side of the electrode assembly). That is, the electrode assembly 300 may include a first electrode tab connected to a first electrode plate on one side and a second electrode tab connected to a second electrode plate on another side. Details thereof are described below with reference to FIG. 6.

The electrode assembly 300 may be accommodated in the case 110 together with an electrolyte. For example, the electrolyte may include a lithium salt such as lithium hexafluorophosphate (LiPF₆) or lithium tetrafluoroborate (LiBF₄), dissolved in an organic solvent such as ethylene carbonate (EC), propylene carbonate (PC), diethyl carbonate (DEC), ethyl methyl carbonate (EMC), or dimethyl carbonate (DMC). The electrolyte may be in a liquid or gel state. As another example, an inorganic solid electrolyte may replace the role of the electrolyte.

The case 110 may form the overall outer appearance of the secondary battery 100 and may be made of a conductive metal, such as aluminum, an aluminum alloy, stainless steel, iron, or nickel-plated steel. In addition, the case 110 may provide a space in which the electrode assembly is accommodated.

According to an embodiment, the case 110 may be a prismatic case, and the secondary battery 100 may be a prismatic secondary battery. However, the secondary battery 100 may be any type of secondary battery such as a prismatic, cylindrical, or pouch-type secondary battery.

For example, the case 110 may be a hollow rectangular parallelepiped having an opening formed on at least one side. Through the opening, the electrode assembly 300 coupled to the first sub-plate 140 and the second sub-plate 240 may be accommodated in the case 110. Specifically, the case 110 may include an upper surface and a lower surface in a rectangular shape extending in a length (or longitudinal) direction (a Z-axis direction) of the case 110, and long side surfaces connecting the upper and lower long edges of the upper surface and the lower surface, respectively, which extend in the Z-axis direction of the case 110. The upper surface, lower surface, and the long side surface of the case 110 may be integrally formed.

The case 110 may include a safety vent 112 formed on at least one surface. As shown in FIGS. 1 and 2, the safety vent 112 may be formed on the upper surface of the case 110. The safety vent 112 may include a notch that is thinner than other areas thereof so as to be opened at a predetermined pressure.

The first cap plate 120 may have a rectangular plate shape and may be coupled to one open side of the case 110. The case 110 and the first cap plate 120 may be formed of a conductive material. The first cap plate 120 may include an electrode terminal hole and an electrolyte injection opening 122 penetrating the outer surface and the inner surface of the first cap plate 120. The first electrode terminal 130 may be coupled to the first cap plate 120 through the electrode terminal hole of the first cap plate 120. After the first cap plate 120 is coupled to the opening of the case 110, the electrolyte injection opening 122 may be formed to inject the electrolyte into the interior of the case 110. After the electrolyte is injected, the electrolyte injection opening 122 may be sealed with a sealing member.

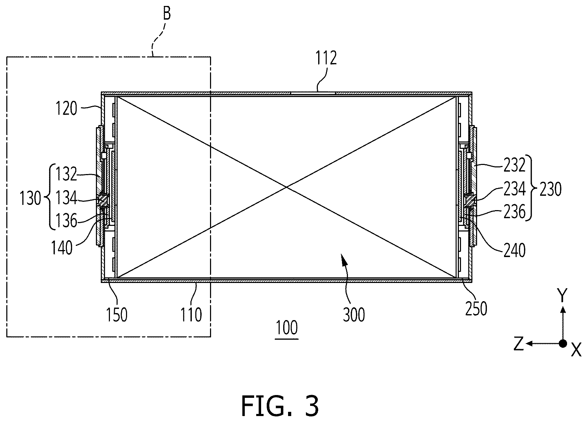

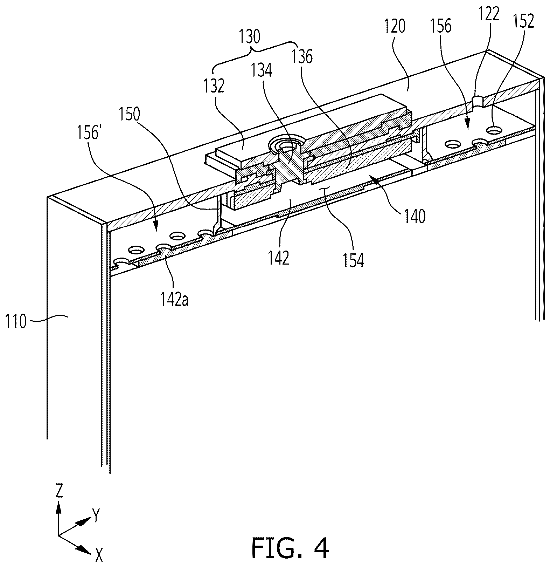

The first electrode terminal 130 may be electrically connected to the first electrode tab and may be exposed outside the first cap plate 120. The first electrode terminal 130 may be formed of metal and may be electrically connected to the first sub-plate 140 by contacting and being welded to the first sub-plate 140. According to an embodiment, the first electrode terminal 130 may include a first collector having a through-hole and disposed on a surface of the first cap plate 120 facing the electrode assembly 300, a first terminal plate having a through-hole and disposed on a surface of the first cap plate 120 opposite the surface facing the electrode assembly 300, and a first rivet that engages the through-hole of the first collector and the through-hole of the first terminal plate and penetrates through the first cap plate 120. The first electrode terminal 130 may be formed of the same metal as the first sub-plate 140. The first electrode terminal 130 may be formed of any one of copper, a copper alloy, aluminum, or an aluminum alloy, but may vary. Further details are described below with reference to FIGS. 3 and 4.

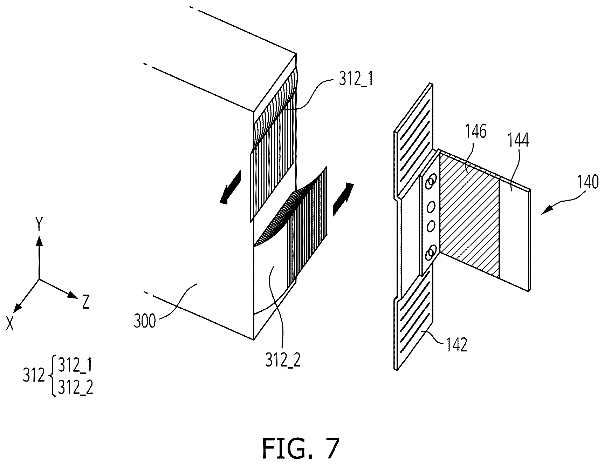

The first sub-plate 140 may be formed of metal and may electrically connect the first electrode tab and the first electrode terminal 130. According to an embodiment, the first sub-plate 140 may include a first plate portion coupled to the first electrode tab, a first tab portion having one end coupled to the first plate portion and the other end (e.g., opposite end) coupled to the first electrode terminal 130, and a first coating layer 146 disposed on at least part of the surface of the first tab portion. The first coating layer 146 may be arranged to surround at least part of a first connecting portion of the first tab portion. More details are described below with reference to FIGS. 7-13. The first sub-plate 140 may be formed of any one of copper, a copper alloy, aluminum, or an aluminum alloy, but this may vary.

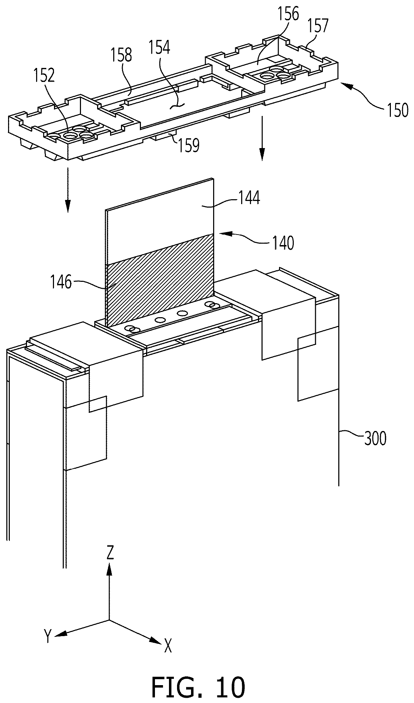

The first insulator 150 may be interposed between the first cap plate 120 and the electrode assembly 300. The first insulator 150 may include an (electrically) insulating material. Thus, it may prevent one side of the electrode assembly 300 from being in electrical contact with the first cap plate 120. According to an embodiment, the first insulator 150 may include a first opening hole through which the first tab portion of the first sub-plate 140 passes, and a first body portion respectively formed so as to be spaced apart from each other with the first opening hole interposed therebetween. Further details are described below with reference to FIG. 10.

The second cap plate 220 may have a rectangular plate shape and may be coupled to the other open side of the case 110. The second cap plate 220 may include an electrode terminal hole passing through between an outer surface and an inner surface of the second cap plate 220. The second electrode terminal 230 may be coupled to the second cap plate 220 through the electrode terminal hole.

The second electrode terminal 230 may be electrically connected to the second electrode tab and may be exposed outside the second cap plate 220. The second electrode terminal 230 may be formed of metal and may be electrically connected to the second sub-plate 240 by contacting and welding the second sub-plate 240. According to an embodiment, the second electrode terminal 230 may include a second collector having a through-hole, disposed on a surface of the second cap plate 220 facing the electrode assembly 300, a second terminal plate having a through-hole and disposed on a surface of the second cap plate 220 opposite the surface facing the electrode assembly 300, and a second rivet that engages the through-hole of the second collector and the through-hole of the second terminal plate and passes through the second cap plate 220. The second electrode terminal 230 may be formed of the same metal as the second sub-plate 240.

The second electrode terminal 230 may have the same shape and structure as the first electrode terminal 130, except that the second electrode terminal 230 may be coupled to the electrode assembly 300 via the second sub-plate 240 in a manner symmetric to the first electrode terminal 130 with respect to the electrode assembly 300. The second electrode terminal 230 may be formed of any one of copper, a copper alloy, aluminum, or an aluminum alloy, but this may vary.

The second sub-plate 240 may be formed of metal and may electrically connect the second electrode tab and the second electrode terminal 230. According to an embodiment, the second sub-plate 240 may include a second plate portion coupled to the second electrode tab, a second tab portion having one end coupled to the second plate portion and another end coupled to the second electrode terminal 230, and a second coating layer 246 disposed on at least a part of a surface of the second tab portion. Here, the second tab portion may include a second connecting portion positioned between the one end of the second tab portion welded to the second plate portion and the other end of the second tab portion welded to the second electrode terminal 230. The second coating layer 246 may be arranged to surround at least part of the second connecting portion. The second sub-plate 240 may be coupled to the electrode assembly 300 and the second electrode terminal 230 in a shape symmetric to the first sub-plate 140 with respect to the electrode assembly 300. The second sub-plate 240 may be formed of any one of copper, a copper alloy, aluminum, or an aluminum alloy, but this may vary.

The second insulator 250 may be interposed between the second cap plate 220 and the electrode assembly 300. The second insulator 250 may include an (electrically) insulating material. Thus, it may prevent one side of the electrode assembly 300 from being in electrical contact with the second cap plate 220. According to an embodiment, the second insulator 250 may include a second opening hole through which the second tab portion of the second sub-plate 240 passes, and a second body portion respectively formed to be spaced apart from each other with the second opening hole interposed therebetween.

The secondary battery 100 may be, for example, a lithium battery cell or a sodium battery cell. However, the secondary battery 100 may encompass all batteries that may repeatedly provide electric power by charging and discharging. In one embodiment, if the secondary battery 100 is a lithium secondary battery, it may exhibit excellent lifespan characteristics and high-rate characteristics, and thus may be used in an electric vehicle (EV). **It** may also be used in a hybrid vehicle such as a plug-in hybrid electric vehicle (PHEV). The lithium secondary battery may be used in applications requiring the storage of a large amount of electricity. For example, it may be used in an electric bicycle or a power tool.

FIG. 3 is a cross-sectional view illustrating a section taken along line A-A' of FIG. 1, and FIG. 4 is an enlarged view illustrating part B of FIG. 3. For convenience of description, the explanation will primarily focus on the first cap plate 120, the first electrode terminal 130, the first sub-plate 140, and the first insulator 150, but the second cap plate 220, the second electrode terminal 230, the second sub-plate 240, and the second insulator 250 may be similarly described.

Referring to FIGS. 3 and 4, the secondary battery 100 may include the first cap plate 120, the first electrode terminal 130, and the first insulator 150. According to an embodiment, the first electrode terminal 130 may include a first collector 136 with a through-hole, disposed on the surface of the first cap plate 120 facing the electrode assembly 300, a first terminal plate 132 with a through-hole, disposed on the surface of the first cap plate 120 opposite the surface facing the electrode assembly 300, and a first rivet 134 that engages the through-hole of the first collector 136 and the through-hole of the first terminal plate 132 and penetrates through the first cap plate 120.

An inner insulating member 160 may be interposed between the inner surface of the first cap plate 120 and the first rivet 134. The inner insulating member 160 may closely contact the inner surface of the first cap plate 120. The inner insulating member 160 may include an (electrically) insulating material and may insulate the first cap plate 120 and the first rivet 134. Also, an outer insulating member 162 may be interposed between the outer surface of the first cap plate 120 and the first terminal plate 132. The outer insulating member 162 may closely contact the first cap plate 120 and may also closely contact the first rivet 134. The outer insulating member 162 may include an (electrically) insulating material and may insulate the first cap plate 120 and the first terminal plate 132. That is, the first cap plate 120 may be electrically isolated from the first electrode terminal 130 by the inner insulating member 160 and the outer insulating member 162.

The first insulator 150 may be interposed between the first cap plate 120 and the electrode assembly 300. The first insulator 150 may include an (electrically) insulating material and may prevent one side of the electrode assembly 300 from being in electrical contact with the first cap plate 120. The first insulator 150 may include a through-hole 152, preferably a plurality of through-holes 152. Thus, if the electrolyte is injected through the electrolyte injection opening 122 of the first cap plate 120, the electrolyte may easily move into the interior of the electrode assembly 300 through the through-hole 152.

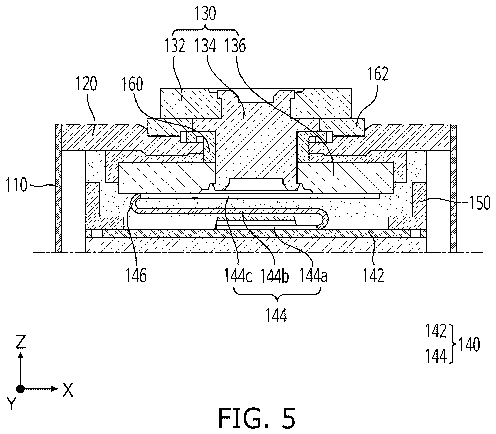

FIG. 5 is a side cross-sectional view illustrating an example of a secondary battery according to an embodiment of the present disclosure. Redundant descriptions of components explained with reference to FIGS. 3 and 4 are omitted.

Referring to FIG. 5, the first sub-plate 140 may include a first plate portion 142 coupled to the first electrode tab, a first tab portion 144 having one end 144a coupled to the first plate portion 142 and the other end 144c (e.g., another end) coupled to the first electrode terminal 130, and a first coating layer 146 disposed on at least part of a surface of the first tab portion 144.

According to an embodiment, the first tab portion 144 may include a first connecting portion 144b positioned between the one end 144a of the first tab portion 144 welded to the first plate portion 142 and the other end 144c of the first tab portion 144 welded to the first electrode terminal 130.

According to an embodiment, the first coating layer 146 may be formed to surround at least part of the first connecting portion 144b of the first tab portion 144. For example, the first coating layer 146 may be formed so as to surround the entire first connecting portion 144b of the first tab portion 144 (i.e., the first coating layer 146 may be on both sides of the first tab portion 144). Accordingly, the first coating layer 146 may reinforce the first connecting portion 144b of the first tab portion 144 and prevent damage to the first tab portion 144 that may occur due to external impact. Specifically, the first coating layer 146 may prevent the first tab portion 144 from falling off due to an external force acting in a direction perpendicular (the X-axis direction and/or Y-axis direction) to the protruding direction (the Z-axis direction) of the first tab portion 144.

According to an embodiment, the first tab portion 144 may be bent at least once at the first connecting portion 144b where the first coating layer 146 is arranged. As shown in FIG. 5, the first connecting portion 144b to which the first coating layer 146 is applied may be bent twice in a zigzag shape. The bent portion of the first connecting portion 144b to which the first coating layer 146 is applied may be formed near the one end 144a of the first tab portion 144 and near the other end 144c of the first tab portion 144.

FIG. 6 illustrates an example of an electrode assembly according to an embodiment of the present disclosure.

Referring to FIG. 6, the electrode assembly 300 may include a first electrode plate 310, a second electrode plate 320, and a separator 330 interposed between the first electrode plate 310 and the second electrode plate 320. The first electrode plate 310, the second electrode plate 320, and the separator 330 may be formed in a thin plate-like or film-like shape. The electrode assembly 300 may have a structure in which multiple sheets of the first electrode plate 310 and multiple sheets of the second electrode plate 320 are alternately laminated with the separator 330 interposed therebetween. In addition, the electrode assembly 300 may be a Z-stack electrode assembly 300 in which both sides of the separator 330 are inserted with the first electrode plate 310 and the second electrode plate 320, and the structure is then bent into a Z shape.

Although FIG. 6 shows the first electrode plate 310 and the second electrode plate 320 as the same size, the two electrode plates may have different sizes. Overhang may occur if the sizes of the first electrode plate 310 and the second electrode plate 320 differ. For example, an area of the negative electrode plate may be larger than an area of the positive electrode plate.

FIG. 6 is a schematic illustration showing a lamination structure of an electrode assembly 300 of the stacked-type and the number, size, or structure of the electrode plates may vary. The outermost layer of the electrode assembly 300 may be finished with either the first electrode plate 310 or the second electrode plate 320. The first electrode plate 310 may be formed as a positive electrode plate, and the second electrode plate 320 may be formed as a negative electrode plate, or vice versa.

According to an embodiment, when the first electrode plate 310 is formed as a positive electrode plate, a positive electrode active material layer that mainly includes a lithium-based oxide may be coated on both sides of a thin aluminum foil that serves as a positive current collector. Also, a positive uncoated portion may be formed at both ends of the positive current collector, where the positive electrode active material layer is not coated.

A positive electrode plate for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode plate may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart electrical conductivity to the electrode. Any material that does not cause an undesirable chemical change in the rechargeable lithium battery and conducts electrons may be used. Examples of the conductive material may include a carbon-based material such as natural graphite, artificial graphite, carbon black, acetylene black, ketjen black, a carbon fiber, a carbon nanofiber, or a carbon nanotube; a metal-based material containing copper, nickel, aluminum, or silver in the form of a metal powder or a metal fiber; a conductive polymer such as a polyphenylene derivative; or a mixture thereof.

Al may be used as the current collector, but is not limited thereto.

The positive electrode active material may include a compound (a lithiated intercalation compound) that may intercalate and deintercalate lithium. Specifically, at least one of a lithium composite oxide containing a metal selected from cobalt, manganese, nickel, and combinations thereof may be used.

The composite oxide may be a lithium transition metal composite oxide. Specific examples of the composite oxide may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, the following compounds represented by any one of the following Chemical Formulas may be used: LiₐA_{1-b}X_{b}O₂-_{c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐN_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L1_{d}GeO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high-nickel-based positive electrode active material having a nickel content greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may realize high capacity and may be applied to a high-capacity, high-energy-density rechargeable lithium battery.

According to an embodiment, in case the second electrode plate 320 is formed as a negative electrode plate, the second electrode plate 320 may include a thin copper foil serving as a negative current collector, and a negative electrode active material layer containing carbon as a main component coated on both sides of the negative current collector. Also, an uncoated portion of the negative electrode may be formed at both ends of the negative current collector, where the negative electrode active material layer is not coated.

The negative electrode plate for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The negative current collector may include a copper foil, a nickel foil, a stainless steel foil, a titanium foil, a nickel foam, a copper foam, a polymer substrate coated with a conductive metal, or a combination thereof.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example, crystalline carbon, amorphous carbon, or a combination thereof. The crystalline carbon may be graphite such as non-shaped, sheet-shaped, flake-shaped, sphere-shaped, or fiber-shaped natural or artificial graphite. The amorphous carbon may be a soft carbon, a hard carbon, a mesophase pitch carbonization product, or calcined coke.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x<2), or a Si-Q alloy (where Q is selected from an alkali metal, an alkaline-earth metal, a Group 13 element, a Group 14 element excluding Si, a Group 15 element, a Group 16 element, a transition metal, a rare earth element, or a combination thereof). The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on surfaces of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles; for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or Sn-based negative electrode active material may be used in combination with a carbon-based negative electrode active material.

The separator 330 may include polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and so on.

The separator 330 may include a porous substrate and a coating layer including an organic material, an inorganic material, or a combination thereof on one or both surfaces of the porous substrate.

The porous substrate may be a polymer film formed of any selected polymer, such as a polyolefin (e.g., polyethylene and polypropylene), a polyester (e.g., polyethylene terephthalate and polybutylene terephthalate), polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, or polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

According to an embodiment, the electrode assembly 300 may include the first electrode plate 310 having at least one first electrode tab 312 formed thereon, the second electrode plate 320 having at least one second electrode tab 322 formed thereon, and the separator 330 interposed between the first electrode plate 310 and the second electrode plate 320.

According to an embodiment, the at least one first electrode tab 312 may be formed as a pair of first electrode tabs 312_1 and 312_2 on one side of the first electrode plate 310, and at least one second electrode tab 322 may be formed as a pair of second electrode tabs 322_1 and 322_2 on one side of the second electrode plate 320. The first electrode tab 312 and the second electrode tab 322 may be formed by welding tabs to uncoated portions of the first electrode plate 310 and the second electrode plate 320, or by punching the uncoated portions of the first electrode plate 310 and the second electrode plate 320.

According to an embodiment, in the stacked state, the pair of first electrode tabs 312_1 and 312_2 may be formed on one side of the electrode assembly 300, and the pair of second electrode tabs 322_1 and 322_2 may be formed on the other side of the electrode assembly 300. When the first electrode plate 310 is formed as a positive electrode plate, the pair of first electrode tabs 312_1 and 312_2 may be formed as positive electrode tabs, and when the second electrode plate 320 is formed as a negative electrode plate, the pair of second electrode tabs 322_1 and 322_2 may be formed as negative electrode tabs. **If** the polarities of the first electrode plate 310 and the second electrode plate 320 are reversed, it is of course possible that the pair of first electrode tabs 312_1 and 312_2 are formed as negative electrode tabs, and the pair of second electrode tabs 322_1 and 322_2 are formed as positive electrode tabs.

FIG. 7 illustrates a perspective view showing a state in which the first electrode tab and the first sub-plate are coupled according to an embodiment of the present disclosure.

For convenience of the following explanation, the description is based on the first electrode tab 312, but although not shown, the second electrode tab 322 may be described similarly to the first electrode tab 312.

Referring to FIG. 7, on one side of the electrode assembly 300, a pair of first electrode tabs 312_1 and 312_2 may protrude and be aligned. A first sub-plate 140 may be welded to the first electrode tab 312 such that the first electrode tab 312 and the first sub-plate 140 are electrically connected. In this case, for welding the first electrode tab 312, the pair of first electrode tabs 312_1 and 312_2 may be bent in different directions. Then, the first sub-plate 140 may be closely attached to the bent surfaces of the pair of first electrode tabs 312_1 and 312_2 and subjected to laser welding or ultrasonic welding.

For example, among the pair of first electrode tabs 312_1 and 312_2, the upper first electrode tab 312_1, may be bent to the left in reference to FIG. 7, and the lower first electrode tab 312_2 may be bent to the right. That is, the pair of first electrode tabs 312_1 and 312_2 on one side of the electrode assembly 300 may be bent in opposite directions.

After the pair of first electrode tabs 312_1 and 312_2 are bent and pressed in opposite directions, the first sub-plate 140 may be positioned on the upper side of the pair of first electrode tabs 312_1 and 312_2, and a first plate portion 142 of the first sub-plate 140 may be laser-welded so that the first electrode tab 312 and the first sub-plate 140 are electrically connected.

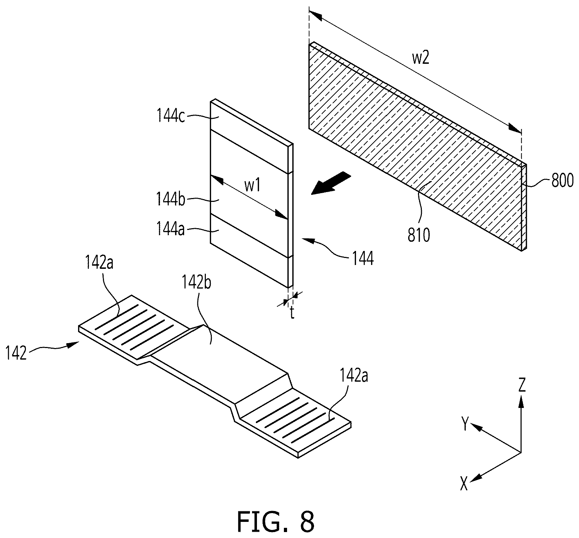

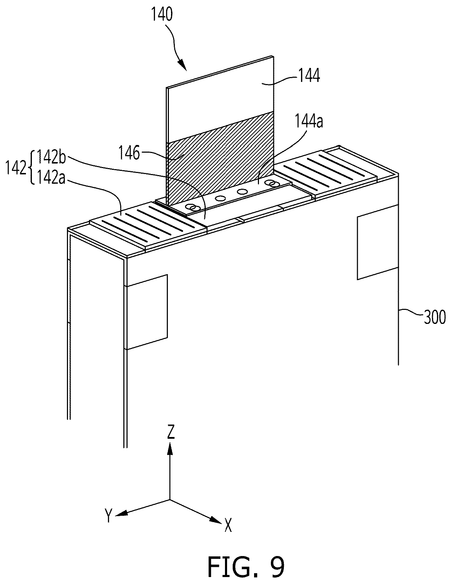

FIG. 8 is an exploded perspective view illustrating an example of the first sub-plate according to an embodiment of the present disclosure, and FIG. 9 is a perspective view showing an example in which the first electrode tab and the first sub-plate are coupled according to an embodiment of the present disclosure.

Referring to FIGS. 8 and 9, the first sub-plate 140 may include a first plate portion 142 and a first tab portion 144 having one end 144a coupled to the first plate portion 142 and the other end 144c coupled to the first electrode terminal 130 (see FIG. 5). The first sub-plate 140 may include a first coating layer 146 formed by disposing a film 800 on at least part of a surface of the first tab portion 144. According to an embodiment, the first sub-plate 140 may include an electrically conductive material. For example, it may include copper (Cu) or aluminum (Al), but the material of the first sub-plate 140 may vary.

According to an embodiment, the first plate portion 142 may include a first welded portion 142a to which the first electrode tab 312 (see FIG. 6) is welded, and a first protruding portion 142b that is connected to the first welded portion 142a and protrudes in a direction toward the first cap plate from the welded portion 142a. That is, the first protruding portion 142b may have a shape that protrudes in the Z-axis direction, which is the direction opposite to where the electrode assembly 300 is positioned.

According to an embodiment, the first plate portion 142 may be electrically connected to the electrode assembly 300. Specifically, the first electrode tab 312 of the electrode assembly 300 may be electrically connected to a front surface and/or a rear surface of the first plate portion 142.

According to an embodiment, the width of the first plate portion 142 may be less than or equal to the thickness of the electrode assembly 300. Specifically, with reference to the X-axis direction, the length of the first plate portion 142 may be less than or equal to the length of the electrode assembly 300.

According to an embodiment, the length of the first plate portion 142 may be less than or equal to the height of the electrode assembly 300. Specifically, with reference to the Y-axis direction, the length of the first plate portion 142 may be less than or equal to the length of the electrode assembly 300.

According to an embodiment, the first welded portion 142a of the first plate portion 142 may be coupled to the first electrode tab 312 of the electrode assembly 300 by laser welding or ultrasonic welding. Accordingly, the first sub-plate 140 may be coupled to the first electrode tab 312 of the electrode assembly 300 and may represent the positive electrode or the negative electrode.

According to an embodiment, the first protruding portion 142b of the first plate portion 142 may be positioned between the two of the first welded portion 142a and may be located at the center of the first plate portion 142. That is, the two of the first welded portion 142a may be formed so as to be spaced apart from each other with the first protruding portion 142b interposed therebetween. Another component, such as an insulating member, may be disposed under the first protruding portion 142b.

According to an embodiment, the first tab portion 144 may have one end 144a welded and coupled to the first protruding portion 142b, and the other end 144c of the first tab portion 144 may be welded and coupled to the first electrode terminal 130.

According to an embodiment, the width w1 of the first tab portion 144 may be less than or equal to the length of the first protruding portion 142b. Specifically, with reference to the Y-axis direction, the length of the first tab portion 144 may be less than or equal to the length of the first protruding portion 142b.

According to an embodiment, the first tab portion 144 may include a first connecting portion 144b positioned between the one end 144a of the first tab portion 144 welded to the first protruding portion 142b and the other end 144c of the first tab portion 144 welded to the first electrode terminal 130. That is, the first connecting portion 144b may be a region of the first tab portion 144 that is not welded.

According to an embodiment, the first coating layer 146 may be formed so as to surround at least part of the first connecting portion 144b of the first tab portion 144. **In** other words, the first coating layer 146 may surround at least part of the first connecting portion 144b of the first tab portion 144. The first coating layer 146 may be formed by adhering the film 800. **In** other words, first coating layer 146 may comprise or consist of the film 800, which is preferably an (heat-bondable) adhesive material. For example, the film 800 may be heat-bonded and adhered to the first connecting portion 144b.

According to an embodiment, the film 800 may further include a first adhesive layer 810 disposed on a surface thereof facing the first tab portion 144. Accordingly, without additional processes, the film 800 may be easily disposed to surround at least part of the first connecting portion 144b to form the first coating layer 146.

According to an embodiment, the width w2 of the film 800 may correspond to the perimeter (2w1 + 2t) of the first connecting portion 144b, which is twice the sum of the width w1 of the first connecting portion 144b and the thickness t of the first connecting portion 144b. Thus, the film 800 may be disposed so as to surround the first connecting portion 144b to form the first coating layer 146. Here, "correspond" may mean that the width w2 of the film 800 is equal to or substantially equal to (within a certain allowable error range) the perimeter (2w1 + 2t) of the first connecting portion 144b.

According to an embodiment, the first coating layer 146 may include at least one of a heat-resistant material or a chemical-resistant material. A heat-resistant material may have excellent stability for long-term use in a high-temperature internal environment of the secondary battery. A chemical-resistant material may have low reactivity to the electrolyte contained in the secondary battery to prevent deformation or decomposition in advance.

With respect to the above-mentioned heat resistance and chemical resistance, the first coating layer 146 may include at least one of a liquid crystal polymer (LCP), polyvinylidene fluoride (PVDF), polyether ether ketone (PEEK), or polyphenylene sulfide (PPS). Preferably, the film 800 may include at least one of a liquid crystal polymer (LCP), polyvinylidene fluoride (PVDF), polyether ether ketone (PEEK), or polyphenylene sulfide (PPS).

The size and shape of the first sub-plate 140 may have various sizes and shapes.

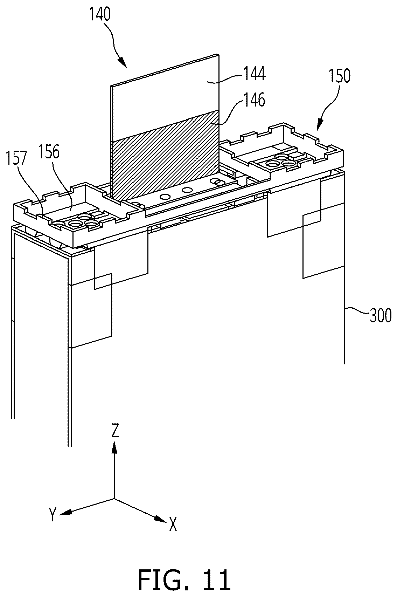

FIG. 10 illustrates a perspective view showing a state in which the first insulator is coupled according to an embodiment of the present disclosure, and FIG. 11 illustrates a perspective view showing an example in which the first insulator is coupled according to an embodiment of the present disclosure.

Referring to FIGS. 10 and 11, the first insulator 150 may include a first opening hole 154 through which the first tab portion 144 of the first sub-plate 140 passes, and a first body portion 156 and a second body portion (e.g. a pair of body portions 156) respectively formed so as to be spaced apart from each other with the first opening hole 154 interposed therebetween (in Y-axis direction). Here, the first body portion 156 may include a through-hole 152, preferably a plurality of through-holes 152. The first insulator 150 may further include a first support portion 157, a first side portion 158, and a first fixing portion 159.

According to an embodiment, the first opening hole 154 may be interposed between the first protruding portion 142b of the first plate portion 142 of the first sub-plate 140 and the first electrode terminal 130 (in Z-axis direction; see FIGs. 4 and 8). In other words, the first opening hole 154 may be adapted to accommodate at least a part of the first electrode terminal 130, particularly at least a part of the first rivet 134, and the first tab portion 144.

According to an embodiment, the first body portion 156 may be coupled to the electrode assembly 300 so as to cover the first plate portion 142 of the first sub-plate 140. The first body portion 156 and the second body portion 156' may be located on both sides (i.e. opposite sides) of the first opening hole 154 along the Y-axis direction. In other words, the pair of body portions 156 and 156' may be located on opposite sides of the first opening hole 154 along the Y-axis direction. The first body portion 156 may be located between the first welded portion 142a of the first plate portion 142 of the first sub-plate 140 and the first cap plate 120 (in Z-axis direction; see FIGs. 4 and 8).

According to an embodiment, the first body portion 156 may cover the first welded portion 142a on the first plate portion 142 of the first sub-plate 140, and the first tab portion 144 and the first protruding portion 142b of the first plate portion 142 of the first sub-plate 140 may be exposed through the first opening hole 154. Also, the first plate portion 142 of the first sub-plate 140 may pass through the first insulator 150 via the first opening hole 154 and may be connected to the first electrode terminal 130.

According to an embodiment, the through-hole 152 may be formed in the first body portion 156, among the pair of body portions in both sides, which corresponds to the location of the electrolyte injection opening 122 of the first cap plate 120. As shown in FIG. 10, the through-hole 152 may be formed in both of the body portions 156 on both sides. Accordingly, when the electrolyte is injected through the first cap plate 120, the first insulator 150 may allow the electrolyte to move into the interior of the electrode assembly 300 through the through-hole 152.

According to an embodiment, the first support portion 157 may be formed in a rectangular ring shape (e.g. a rectangular frame shape) along the outer periphery of both sides of the first body portion 156. The first support portion 157 may be formed so as to have a certain height in the Z-axis direction (a direction toward the first cap plate 120, see FIG. 4) from the first body portion 156. The certain height may correspond to the spacing distance between the first sub-plate 140 coupled to the electrode assembly 300 and the first cap plate 120 (e.g. in Z-axis direction). Thus, the first support portion 157 may prevent the electrode assembly 300 from moving along the Z-axis direction inside the case 110.

According to an embodiment, the first side portion 158 may be respectively formed to connect and secure both sides of the first support portion 157. The first side portion 158 may be located on both sides of the first opening hole 154 along the X-axis direction.

According to an embodiment, the first fixing portion 159 may be formed so as to protrude toward the first sub-plate 140 from the first side portion 158. The first fixing portion 159 may have a hook shape, and at least one pair may be formed in a symmetrical manner. Thus, the first fixing portion 159 may be coupled to the first protruding portion 142b of the first plate portion 142 of the first sub-plate 140. Accordingly, the first insulator 150 may be fixed to the first sub-plate 140.

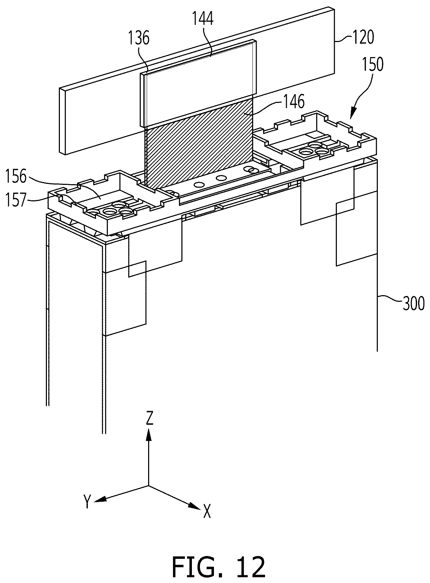

FIG. 12 illustrates a perspective view showing an example of coupling of the first cap plate and the first electrode terminal according to an embodiment of the present disclosure.

Referring to FIG. 12, after the first insulator 150 is coupled, the first tab portion 144 may be coupled to the first collector 136. The first tab portion 144 may be coupled by welding with the first collector 136. Accordingly, the first tab portion 144 may be coupled to the first cap plate 120 to which the first collector 136 is coupled. Thereafter, the first tab portion 144 having the first coating layer 146 arranged thereon may be bent at least once, and the open side of the case may be sealed by the first cap plate 120.

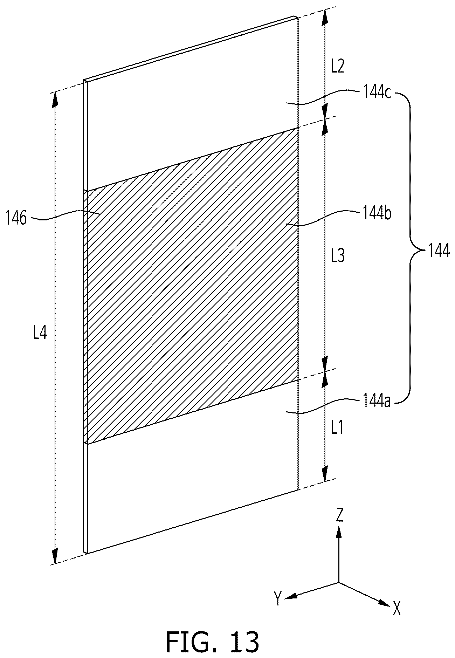

FIG. 13 illustrates a perspective view of an example of the first tab portion in an unfolded state according to an embodiment of the present disclosure.

Referring to FIG. 13, the first tab portion 144 may include one end 144a, a first connecting portion 144b, the other end 144c, and a coating layer 146. The first coating layer 146 may be disposed so as to surround at least part of the first connecting portion 144b.

According to an embodiment, when the first tab portion 144 is in an unfolded state, the length L1 of the one end 144a of the first tab portion 144 may be 10%-30% of the entire length L4 of the first tab portion 144 in the Z-axis direction. Specifically, in the Z-axis direction, the length L1 of the one end 144a of the first tab portion 144 may be 10%-30% of the entire length L4 of the first tab portion 144.

According to an embodiment, when the first tab portion 144 is in an unfolded state, the length L3 of the other end 144c of the first tab portion 144 welded to the first electrode terminal may be 10%-30% of the entire length L4 of the first tab portion 144 in the Z-axis direction.

According to an embodiment, when the first tab portion 144 is in an unfolded state, the length L2 of the first connecting portion 144b may be 40%-80% of the entire length L4 of the first tab portion 144 in the Z-axis direction.

Electrodes and electrode terminals of an electrode assembly may be electrically connected through a sub-plate. The sub-plate may electrically connect the electrodes and the electrode terminals through contact with an electrode tab. **In** some forms of the sub-plate, a tab portion formed of a thin metal plate may be included. The tab portion may be deformed by external impact and/or vibration. At this time, there may occur a problem in which the tab portion fractures and causes a short-circuit.

According to some embodiments of the present disclosure, a secondary battery having improved safety may be provided.

According to some embodiments of the present disclosure, by disposing the first coating layer on the first tab portion of the first sub-plate, it is possible to reinforce the first tab portion and prevent damage to the first tab portion that may occur due to external impact.

Although the present disclosure has been described above with respect to embodiments thereof, the present disclosure is not limited thereto. Various modifications and variations may be made by those skilled in the art without departing from the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (100), comprising:
an electrode assembly (300) comprising a first electrode tab (312) on one side thereof and a second electrode tab (322) on another side thereof;
a case (110) having at least one open side, the case (110) accommodating the electrode assembly (300);
a first cap plate (120) coupled to at least one open side of the case (110);
a first electrode terminal (130) electrically connected to the first electrode tab (312), the first electrode terminal (130) being exposed outside the first cap plate (120);
a first sub-plate (140) electrically connecting the first electrode tab (312) and the first electrode terminal (130); and
a first insulator (150) between the first cap plate (120) and the electrode assembly (300),
wherein the first sub-plate (140) comprises:
a first plate portion (142) coupled to the first electrode tab (312);
a first tab portion (144) having one end (144a) coupled to the first plate portion (142) and another end (144c) coupled to the first electrode terminal (130); and
a first coating layer (146) on at least a part of a surface of the first tab portion (144).

2. The secondary battery as claimed in claim 1, wherein the first plate portion (142) comprises:
a first welded portion (142a) welded to the first electrode tab (312); and
a first protruding portion (142b) connected to the first welded portion (142a), the first protruding portion (142b) protruding in a direction from the welded portion toward the first cap plate (120).

3. The secondary battery as claimed in claim 2, wherein the first welded portion (142a) includes first welded portions, the first welded portions being spaced apart from each other with the first protruding portion (142b) therebetween.

4. The secondary battery as claimed in claim 2 or 3, wherein:
the first tab portion (144) is welded to the first protruding portion (142b) at one end (144a) of the first tab portion (144), and
the first tab portion (144) is welded to the first electrode terminal (130) at another end (144c) of the first tab portion (144).

5. The secondary battery as claimed in claim 4, wherein the first tab portion (144) comprises a first connecting portion (144b) between the one end (144a) of the first tab portion (144) welded to the first protruding portion (142b) and the another end (144c) of the first tab portion (144) welded to the first electrode terminal (130), and the first coating layer (146) surrounds at least part of the first connecting portion (144b) of the first tab portion (144).

6. The secondary battery as claimed in claim 5, wherein the first tab portion (144) is bent at least once at the first connecting portion (144b) on which is the first coating layer (146).

7. The secondary battery as claimed in one of the preceding claims, wherein the first coating layer (146) is an adhered film (800).

8. The secondary battery as claimed in claim 7, wherein a width (w2) of the adhered film (800) corresponds to a perimeter of the first connecting portion (144b), the perimeter being twice a sum of a width (w1) of the first connecting portion (144b) and a thickness (t) of the first connecting portion (144b).

9. The secondary battery as claimed in claim 7 or 8, wherein the adhered film (800) further comprises a first adhesive layer (810) on a surface of the adhered film (800) facing the first tab portion (144).

10. The secondary battery as claimed in one of the preceding claims, wherein the first coating layer (146) comprises at least one of a heat-resistant material and a chemical-resistant material.

11. The secondary battery as claimed in one of the preceding claims, wherein the first insulator (150) comprises:
a first opening hole (154) through which the first tab portion (144) of the first sub-plate (140) penetrates; and
a first body portion (156) and a second body portion (156') being spaced apart from each other with the first opening hole (154) therebetween.

12. The secondary battery as claimed in one of the preceding claims, wherein the first electrode terminal (130) comprises:
a first collector (136) on a surface of the first cap plate (120) facing the electrode assembly (300), the first collector (136) having a through-hole;
a first terminal plate (132) on an opposite surface of the first cap plate (120) from the surface facing the electrode assembly (300), the first terminal plate (132) having a through-hole; and
a first rivet (134) engaging the through-hole of the first collector (136) and the through-hole of the first terminal plate (132), the first rivet (134) penetrating through the first cap plate (120).

13. The secondary battery as claimed in one of the preceding claims, further comprising:
a second cap plate (220) coupled to another open side of the case (110);
a second electrode terminal (230) electrically connected to the second electrode tab (322), the second electrode terminal (230) being exposed outside the second cap plate (220);
a second sub-plate (240) electrically connecting the second electrode tab (322) and the second electrode terminal (230); and
a second insulator (250) between the second cap plate (220) and the electrode assembly (300).

14. The secondary battery as claimed in claim 13, wherein the second sub-plate (240) comprises:
a second plate portion coupled to the second electrode tab (322);
a second tab portion having one end coupled to the second plate portion and another end coupled to the second electrode terminal (230); and
a second coating layer (246) on at least part of a surface of the second tab portion.

15. The secondary battery as claimed in claim 14, wherein:
the second tab portion comprises a second connecting portion between the one end of the second tab portion welded to the second plate portion and the another end of the second tab portion welded to the second electrode terminal (230), and
the second coating layer (246) surrounds at least part of the second connecting portion.
